# EUROPEAN PATENT APPLICATION

(11) **EP 1 725 043 A2**
(43) Date of publication of application: **22.11.2006**
(21) Application number: 06252389.9
(22) Date of filing: 05.05.2006
(51) Int. Cl.: H04N 7/26, H04N 7/50

(54) **Selection of and access to MPEG sub-frames without re-encoding**

(30) Priority: 16.05.2005 US 908545
(71) Applicant: Ensequence, Inc., Portland, OR 97204 (US)
(72) Inventor: Westerman, Larry A., Portland OR 97210 (US)
(74) Representative: Carlin, Robert George

(57) **Abstract**

Methods, systems and computer-program products for encoding an image so that a portion of the image can be extracted without requiring modification of any of the encoded data. A valid MPEG I-frame sequence is generated from the portion of the image, then fed directly to an MPEG decoder for decompression and display.

## Description

### FIELD OF THE INVENTION

This invention relates generally to image encoding and decoding techniques, and more particularly to a methods and systems for generating a partial image from a larger compressed image.

### BACKGROUND OF THE INVENTION

The Motion Picture Experts Groups (MPEG) video compression standards (ISO/IEC 11172-1 or MPEG-1 and ISO/IEC 13818-2 or MPEG-2) define encoding protocols for the compression of motion video sequences. MPEG video compression can also be used to flexibly encode individual still images or image sequences. For example, a single still image can be encoded as a video sequence consisting of a single Group-of-Pictures, containing a single picture encoded as an intra-coded image (I-frame). Multiple still images can be encoded together as a video sequence consisting of a single Group-of-Pictures, containing multiple pictures, at least the first of which is encoded as an intra-coded image (I-frame) and the remainder of which can be encoded as I-frame, prediction-coded images (P-frame) or bidirectional-prediction-coded (B-frame) images.

One advantage of encoding still images in this manner is that a hardware MPEG decoder can be used to create the video image content from a given MPEG data stream. This reduces the software requirements in the decoding/display system. An example of such a system is an integrated receiver/decoder or set-top box used for the reception, decoding and display of digitally-transmitted television signals. In such a system, a common hardware video decoder can be used to decode and present for display both conventional streaming MPEG video data, and individual MPEG-encoded still images or still image sequences.

Using a hardware MPEG decoder to decode and display still image data presents one significant limitation on the image content, namely that the still image match the size of the standard video format for the decoder. This means for example that an image larger than the standard video format cannot be decoded by the hardware decoder. One exception to this rule exists, in that a high-definition television (HDTV) digital MPEG decoder must be capable of decoding a full-size HDTV image and displaying only a standard-definition television (SDTV) image. This exception is controlled by special data in the HDTV sequence, which provides pan-and-scan data to determine which portion of the (larger) HDTV image is output to the (smaller) SDTV display. However, even in this case the encoded image must match the HDTV image format.

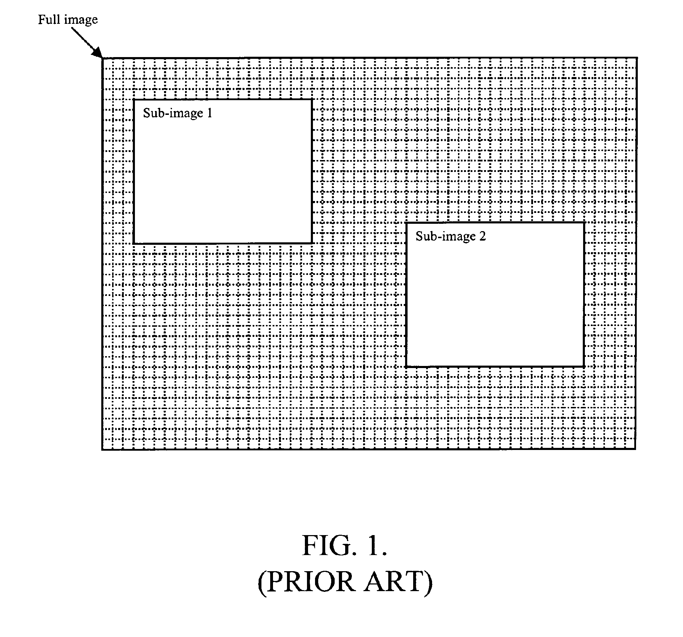

A number of inventions address the desire to encode a large image, using one of the MPEG standard compression protocols, and decode only a portion of the image for display. The concept is shown in FIGURE 1. A large image composed of multiple macroblocks is encoded and transmitted or stored. At display time, a sub-image is selected for display that matches the image size requirements of the underlying decoder/display system. A number of sub-images may be selected for display, each with a different position of the upper-left corner of the sub-image, but each with the same width and height. Note that in all that follows, the position of the sub-image is limited to coincide with a macroblock boundary, that is, be an integer multiple of 16 rows and columns offset from the original origin of the full image, because macroblocks are 16 by 16 pixels.

Civanlar et al. (US Patent 5,623,308) describe the use of an MPEG encoder to compress a large image which consists of a multiplicity of smaller sub-images. The large image is divided into slices according to the MPEG encoding standard, and each slice is divided into sub-slices, each of which corresponds to a macroblock row within a sub-image. The encoded data for a sub-image is extracted from the input data by searching for slice start codes corresponding to the desired sub-image, then recoding the slice start code and the macroblock address increment for the data, bit shifting the data for the remainder of the sub-slice, and padding the sub-slice to a byte boundary. Each such large image must be encoded as a P-frame, so that each sub-image is encoded independently of every other sub-image. This method has significant disadvantages:
- each sub-image requires a different MPEG header to properly define the size of the image;
- the resulting P-frame does not constitute a valid MPEG picture sequence, but must be supplied with a prepended I-frame for proper decoding; and
- bit replacement and bit-shifting operations can be prohibitively expensive and slow when performed by a low-powered processor.

McLaren (US Patent 5,867,208) presents a different method of extracting a sub-image from a larger MPEG-encoded image. Each row of macroblocks in the full image is encoded using standard I-frame encoding. If the full image is wider than the desired subimage, each macroblock row must be broken into multiple slices, each of which contains at least two macroblocks. This limits horizontal offsets to pre-determined two-macroblock increments. By selecting the correct sequence of slices, a sub-image can be constructed from the full image. The resulting sub-image corresponds to the desired input image size for the hardware decoder, so a single header suffices for all sub-images from the full image. However, if multiple slices are encoded in a given row, the slices must be recoded to insert the proper macroblock address increment. Macroblock address increments are encoded using Huffman codes, so the modification of macroblock address increments requires bit-shifting, which as noted can be prohibitively slow on low-power processors.

Boyce et al. (US Patent 6,246,801) extract a sub-image from a larger MPEG-encoded image by modification of the MPEG decoding process. Undisplayed macroblocks at the beginning of each slice are decoded, but only the DC coefficients are retained for discarded macroblocks. This technique modifies the decoding process, and so does not solve the problem of providing a conforming MPEG sequence for use with a hardware decoder.

Boyer et al. (US Patent 6,337,882) modify the technique of 6,246,801 by encoding each macroblock independently, so that each macroblock can be decoded independently. This technique modifies both the encoding and decoding processes (for example, by using JPEG encoding), making the resulting data non-compliant with the MPEG encoding standards.

Zdepski et al. (US Patent application 2004/0096002) describe a technique for repositioning a sub-image within a larger image. This technique generates a P-frame image. In this technique, slices which do not contain any sub-image data are encoded as empty slices, while slices containing sub-image data require the generation of empty macroblocks, and the modification of the content of the sub-image data. As with 5,623,308, the resulting data do not constitute a valid MPEG video sequence, and so cannot be passed independently to a hardware video decoder.

What is desired is a method of extracting from a full image, data constituting a sub-image, which can then be constituted into a valid MPEG I-frame sequence without requiring bit-shift operations.

### SUMMARY OF THE INVENTION

The current invention defines methods, systems and computer-program products for encoding an image so that a portion of the image can be extracted without requiring modification of any of the encoded data, thereby generating a valid MPEG I-frame sequence that can be fed directly to a hardware or software MPEG decoder for decompression and display.

### BRIEF DESCRIPTION OF THE DRAWINGS

Preferred and alternative embodiments of the present invention are described in detail below with reference to the following drawings.

FIGURE 1 is an illustration of existing prior art;

FIGURES 2 and 3 illustrate components of a system formed in accordance with an embodiment of the present invention;

FIGURE 4 is a flow diagram of an example process performed by the system shown in FIGURES 2 and 3;

FIGURE 5 is an example video stream format formed in accordance with an embodiment of the present invention;

FIGURE 6 is an example of content of a single-frame video sequence used in an embodiment of the present invention;

FIGURE 7 depicts a portion of the contents of the single image slice with associated length data;

FIGURE 8 is a flow diagram for an example macroblock encoding process formed in accordance with an embodiment of the present invention;

FIGURE 9 illustrates an example data structure formed in accordance with an embodiment of the present invention;

FIGURE 10 illustrates an example of the construction of an encoded image from a selection of a portion of a larger image;

FIGURE 11 illustrates sub-image selections that are partially outside the limits of the larger image; and

FIGURE 12 illustrates an example data structure formed in accordance with an embodiment of the present invention;

### DETAILED DESCRIPTION OF THE PREFERRED EMBODIMENT

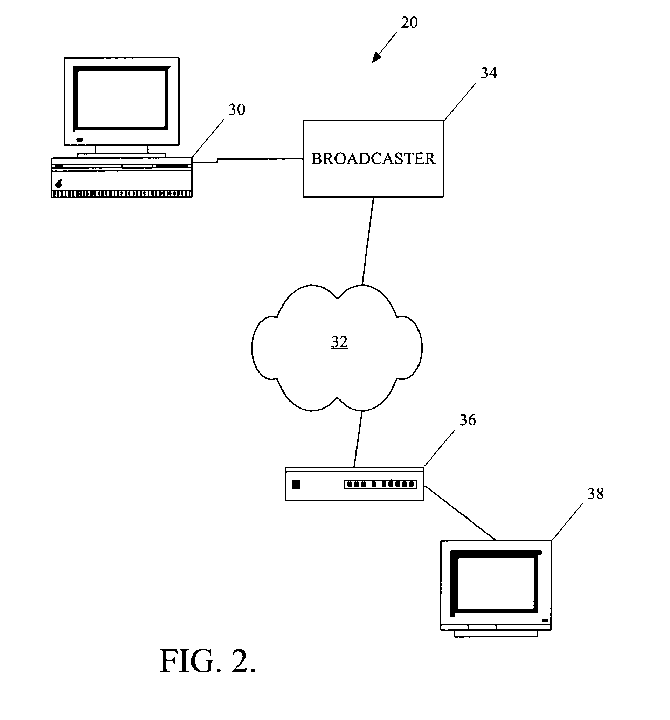

FIGURE 2 shows a diagram of a system 20 that creates sub-images from a larger image. Prior to broadcast, an image file passes is processed by a special MPEG video encoder device 30 to produce a sub-image. The sub-image is encoded and is multiplexed with other audio, video and data content for broadcast by the device 30, a broadcast device 34 and/or some other encoding/multiplexing device. The multiplexed data stream is broadcast to a Set-Top Box (STB) 36 over a network 32. The STB 36 decodes the data stream and passes the decoded data stream to an iTV application running on the STB 36. The iTV application generates an image from the decoded data stream. The resulting image is displayed on a viewer's television screen (display 38).

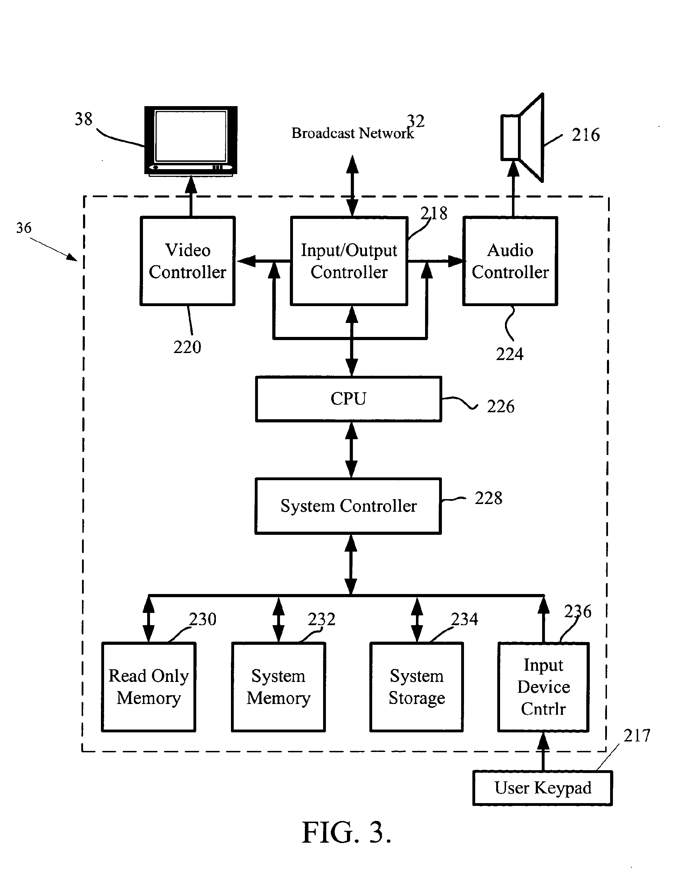

FIGURE 3 shows an example of the device STB (data processing/media control reception system) 36 operable for using embodiments of the present invention. The STB 36 receives data from the broadcast network 32, such as a broadband digital cable network, digital satellite network, or other data network. The STB 36 receives audio, video, and data content from the network 32. The STB 36 controls display 38, such as a television, and an audio subsystem 216, such as a stereo or a loudspeaker system. The STB 36 also receives user input from a wired or wireless user keypad 217, which may be in the form of a STB remote.

The STB 36 receives input from the network 32 via an input/output controller 218, which directs signals to and from a video controller 220, an audio controller 224, and a central processing unit (CPU) 226. In one embodiment, the input/output controller 218 is a demultiplexer for routing video data blocks received from the network 32 to a video controller 220 in the nature of a video decoder, routing audio data blocks to an audio controller 224 in the nature of an audio decoder, and routing other data blocks to a CPU 226 for processing. In turn, the CPU 226 communicates through a system controller 228 with input and storage devices such as ROM 230, system memory 232, system storage 234, and input device controller 236.

The system 36 thus can receive incoming data files of various kinds. The system 36 can react to the files by receiving and processing changed data files received from the network 32.

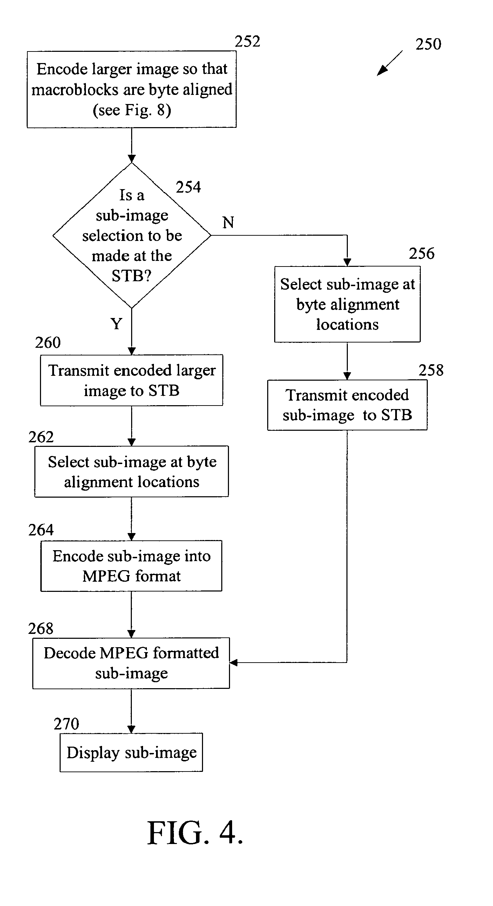

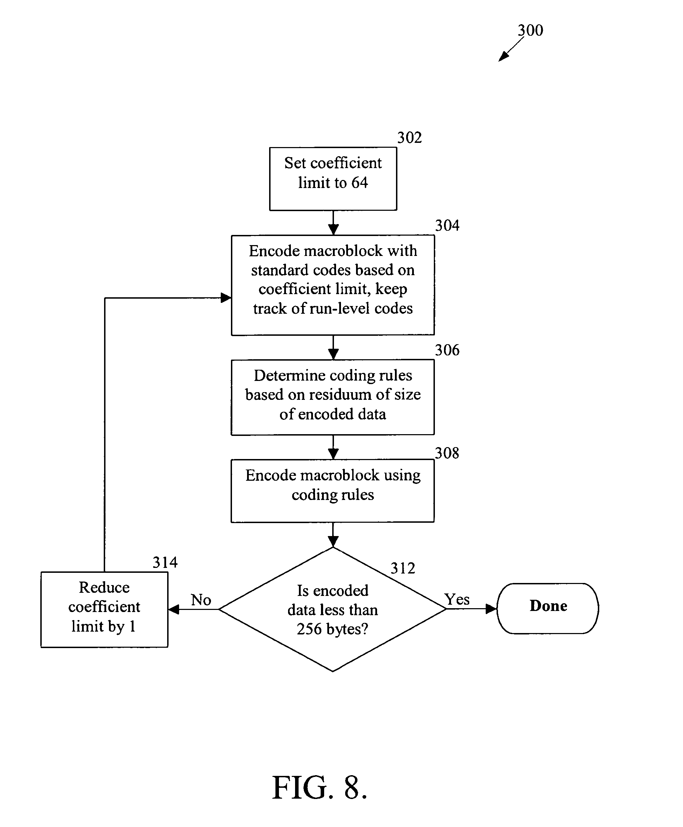

FIGURE 4 illustrates an example process 250, an image larger than a standard screen size is encoded so that macroblocks are byte aligned. This is described in more detail in FIGURE 8. At a decision block 254, a decision has been predefined whether a selection of a sub-image of the encoded image is to be made at the STB 36 or before transmission at the encoder device 30 or similar device. If the sub-image is to be transmitted, then, at a block 256, the sub-image is selected at byte alignment locations then encoded and transmitted (block 258) to STBs 36. If sub-image selection is to be made at the STB 36, then at a block 260 the encoded larger image is transmitted to STBs 36. At a block 262, a selection of the sub-image is performed at the STB 36. Sub-image selection may be performed automatically or manually by operating a user interface device, e.g., user keypad 217.

After the STB 36 has identified the sub-image, the sub-image is encoded into MPEG format at a block 264. At a block 268, the MPEG formatted sub-image is decoded using a standard MPEG decoder. The decoded sub-image is then displayed at a block 270.

### MPEG video encoding

Briefly, MPEG video encoding for intra-coded images is accomplished by dividing the image into a sequence of macroblocks, each of which is 16 columns by 16 rows of pixels. By convention, an MPEG-1 macroblock consists of 16x16 luminance (Y) values, and 8x8 sub-sampled blue (Cb) and red (Cr) chrominance difference values. These data are first divided into 6 8x8 blocks (four luminance, one blue chrominance, and one red chrominance). Each block is transformed by a discrete cosine transform, and the resulting coefficients are quantized using a fixed quantization multiplier and a matrix of coefficient-specific values. The resulting non-zero quantized coefficients are encoded using run/level encoding with a zig-zag pattern. A fixed bit sequence marks the end of the run/level encoding of a block, and the end of all encoded blocks signals the end of the macroblock.

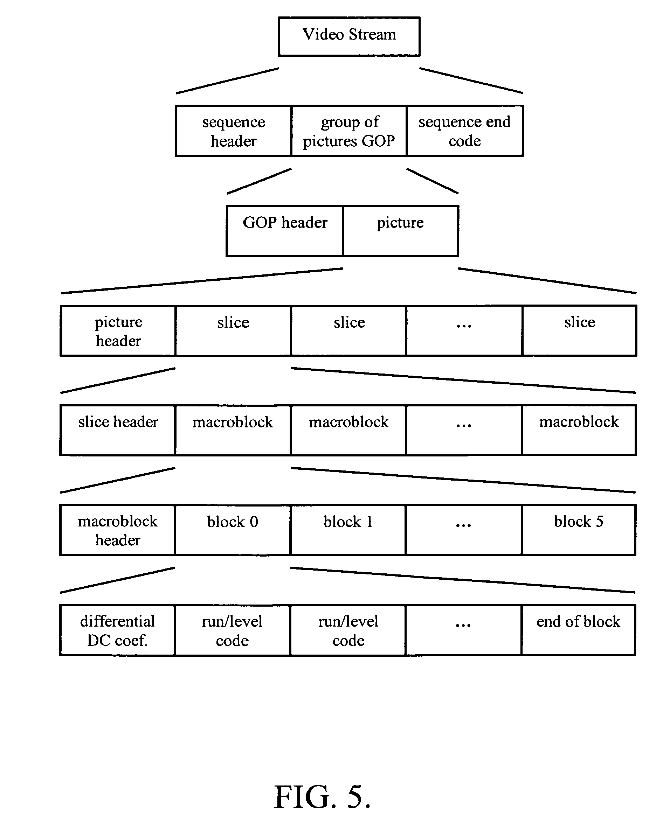

The MPEG standard describes a hierarchy of elements which constitute a valid MPEG video stream. FIGURE 5 shows the elements which constitute a video stream containing a single I-frame image.

Note that the size of a box in FIGURE 5 is not proportional to the size of the contents of the box. The multiple macroblocks in a given slice will not necessarily have, and typically will not have, the same number of encoded bits. The same is true for the multiple blocks in a single macroblock. The MPEG video encoding standards utilize variable-length (Huffman) codes for the constituent elements of blocks and macroblocks, employing codes of different sizes to represent macroblock type, differential DC coefficients, and run/level coefficient codes. Thus, in general, any single block or macroblock can have a length which is variable, and in particular is not necessarily an exact multiple of 8-bits ― that is, macroblock and block code boundaries are not byte aligned like the boundaries of sequence, GOP, picture and slice headers.

Conventional slice headers comprise 38 bits (32 bit start code, 5 bit quantization value, 1 bit signal), so the start of the data of the first macroblock in each conventional slice does not lie on a byte boundary, and the start of the data of each subsequent macroblock will typically fall randomly on a bit position within the starting byte. This trait complicates the creation of sub-image files from larger MPEG image files, since the boundary of a macroblock can typically only be found by decoding the variable length codes that constitute the various elements of the macroblock and block coding structures.

The present invention uses a special encoded image file format (the Extractable MPEG Image or EMI format) that incorporates MPEG compressed data, but is not directly compliant with the MPEG video standard. Desired portions of the EMI file content are combined with minimal amounts of newly-generated data to create a new file or data buffer which is fully compliant with the MPEG-1 video standard, and thus can be directly decoded by any compliant MPEG video decoder.

### Generating a valid MPEG sequence

For any given decoding/display system, the video image format will be the same from sequence to sequence. For example, in the NTSC standard, all video images are 720 columns by 480 rows, while for the PAL standard, all video images are 720 columns by 576 rows. Similarly, the other parameters of the video display, namely pixel aspect ratio and frame rate, are set by the video standard. Therefore, many elements of the sequence shown in FIGURE 5 will be identical from one still image sequence to another. These include the sequence header, the GOP header, the picture header, and the sequence end code. Furthermore, the slice headers will have a similar form for all still images, changing only the quantization value according to the image encoding parameters. For this reason, the contents of these elements of the video stream can be generated in advance, or generated 'on-the-fly' within the decoder system, without knowledge of the image content.

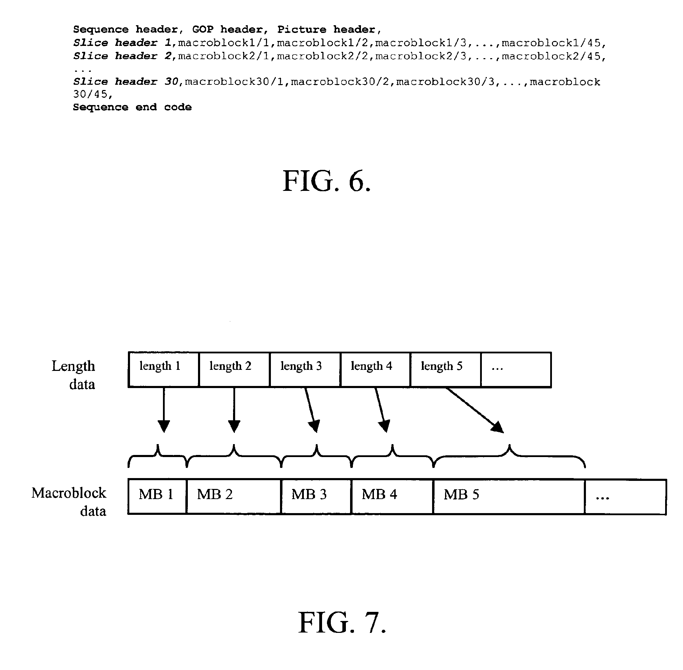

Conceptually the content of a single-frame video sequence can be described by the structure shown in FIGURE 6, where bold elements are fixed in size and content, italicized elements are variable from image to image, and bold italicized elements depend on the image encoding parameters rather than on the image content:

The EMI file format of the current invention incorporates MPEG-encoded data for every macroblock in the original image, encoded as an intra-coded macroblock. Using techniques described in detail below, the encoded data for each macroblock is made to occupy an integer number of bytes, that is, the bit count for each macroblock is a multiple of 8 and the data for each macroblock is byte-aligned. By this means, data from multiple sequential macroblocks can be extracted from the EMI file content and concatenated to yield a valid MPEG slice, without requiring bit shifts of the macroblock data.

### Encoding techniques to force byte alignment

At the slice header level, extra slice information can be included within the slice header. Each extra slice information unit occupies 9 bits (a signal bit and 8 data bits). Multiple information units can therefore be used to extend the size of a slice header to ensure that the first macroblock after the slice header commences on a byte boundary.

At the macroblock header level, macroblock stuffing allows the encoder to modify the bit rate. Each instance of macroblock stuffing occupies 11 bits. Thus, multiple macroblock stuffing codes can be used to pad the number of bits in a single macroblock to any desired bit boundary. Additionally, for an intra-coded picture (I-frame), each macroblock type can be encoded in two ways, with and without the quantization value. Since the quantization value does not typically change during the course of encoding a still image, the quantization value need not be specified for each macroblock. However, in one embodiment, this technique is used to set the size of the macroblock type field to either 1 or 7 bits.

At the block level, coefficient run/level codes fall into two categories, those for which explicit codes are supplied, and those which must use the escape mechanism. Explicit run/level codes occupy from 2 to 17 bits, whereas escape sequences occupy 20 or 28 bits (depending on the level value). However, explicit run/level codes need not be used for a given run/level sequence, so an encoder can optionally substitute escape encoding for explicit run/level codes, thereby modifying the number of bits required to express a particular run/level code.

These four mechanisms can be used in concert to create encoded MPEG data which has the format shown in FIGURE 5, but in which each slice header and each macroblock occupies an integer multiple of 8 bits, so that all components at and above the macroblock level end on byte boundaries. With this encoding, the boundaries of macroblocks can easily be located within the data stream, by providing a length table which gives the number of bytes of encoded data in each macroblock.

The structure of the data produced using the method described in this invention is shown in FIGURE 7, which depicts a portion of the contents of the single image slice, with associated length data. Each successive macroblock starts on a byte boundary, and the location of the boundaries of each macroblock can be determined from the contents of the length table. Thus, the beginning and end of any sequence of macroblocks within the slice can be determined. In particular, if the slice contains more than 45 macroblocks, a subset of the macroblocks can be extracted for a 720-pixel-wide image without requiring any decoding of the encoded macroblock content, nor any bit shift operations.

### Byte-aligning slice headers

A conventional slice header occupies 38 bits. The addition of two information bytes (of 9 bits each) to the slice header raises the total bit count to 56 (=7*8), resulting in a byte-aligned slice header.

### Byte-aligning macroblocks

When encoding a macroblock, variable length codes are used to express the macroblock type, the macroblock address increment, the DC coefficient differential, and the run-level codes for the quantized coefficients. When attempting to byte-align the encoded data for a macroblock, the residuum of a given code (that is, the number of bits in the last partial byte of the pattern) is of importance, since modifying the macroblock type or encoding a run-level pair using an escape sequence can change the residuum of the corresponding code, and therefore change the residuum of the encoded data for the entire macroblock. As an example, the run-level pair 1,2 can be expressed using the Huffman code 0001 100 (a residuum of 7), or using the escape sequence 0000 01 0000 01 0000 0010 (a count of 20, a residuum of 4).

In the preferred embodiment of this invention, when encoding a single macroblock, the number of encoding bits for the entire macroblock will have a residuum of 0 (that is, be a exact multiple of 8 bits), and the total number of bytes will be less than 256, so the byte count can be expressed in a single 8-bit unsigned value.

To achieve an encoded data length with a residuum of zero, the macroblock is first encoded using the given quantization value, employing the minimal code words defined by the MPEG-1 video encoding specification. A count is kept of the number of runlevel code words used for each residuum from 0 to 7.

The residuum of the total number of bits in the encoded data for the macroblock is determined. Based on this residuum, and the count of code words for each residuum, the macroblock is re-encoded. During the re-encoding, three possible changes can be made to the encoding process:
1. Macroblock stuffing may be added before the macroblock address increment is encoded;
2. The macroblock type may be encoded as intra-with-quantizer, rather than as intra; and
3. Certain run-level codes may be changed from the short code form to the escape form.

Table I gives the rules for how these changes are applied, based on the residuum for the original encoding and the count of code words. The macroblock is re-encoded using the rules, and the total number of bytes of data are determined. If the total number of bytes exceeds 255, the encoding process starts over. In this case, the number of the last possible encoded coefficient (which starts at 64) is decremented. This process repeats until the total number of bytes for the macroblock is less than 256. Note that this requirement can always be met, since in the limit of only one coefficient being encoded (the DC coefficient), the maximum block size is 1 bit for the type, 1 bit for the address increment, and 20 bits for each block, plus no more than 60 bits added by the modification process defined by Table 1.

**Table 1.**

| **If the residuum for the macroblock is ...** | **then ...** | **on re-encoding ...** |
|---|---|---|
| 0 | regardless of the run-level codes | no change is required |
| 1 | if at least one run-level code with residuum 5 was used | one run-level code with residuum 5 is encoded as an escape sequence |
| | if at least one run-level code with residuum 3 was used | the macroblock type is encoded as intra-with-quantizer, and one run-level code with residuum 3 is encoded as an escape sequence |
| | if at least one run-level code with | one macroblock stuffing code is inserted, |
| | residuum 6 was used | the macroblock type is encoded as intra-with-quantizer, and one run-level code with residuum 6 is encoded as an escape sequence |
| | if at least two run-level codes with residuum 2 were used | one macroblock stuffing code is inserted, and two run-level codes with residuum 2 are encoded as escape sequences |
| | otherwise | three macroblock stuffing codes are inserted, and the macroblock type is encoded as intra-with-quantizer |
| 2 | regardless of the run-level codes | the macroblock type is encoded as intra-with-quantizer |
| 3 | if at least one run-level code with residuum 7 was used | one run-level code with residuum 7 is encoded as an escape sequence |
| | if at least one run-level code with residuum 5 was used | the macroblock type is encoded as intra-with-quantizer, and one run-level code with residuum 5 is encoded as an escape sequence |
| | if at least one run-level code with residuum 2 was used | one macroblock stuffing code is inserted, and one run-level codes with residuum 2 is encoded as an escape sequence |
| | if at least one run-level code with residuum 1 was used and one run-level code with residuum 3 was used | one macroblock stuffing code is inserted, the macroblock type is encoded as intra-with-quantizer, one run-level code with residuum 1 is encoded as an escape sequence, and one run-level code with residuum 3 is encoded as an escape sequence |
| | otherwise | five macroblock stuffing codes are inserted, and the macroblock type is encoded as intra-with-quantizer |
| 4 | if at least one run-level code with residuum 6 was used | the macroblock type is encoded as intra-with-quantizer, and one run-level code with residuum 6 is encoded as an escape sequence |
| | if at least one run-level code with residuum 3 was used | the macroblock type is encoded as intra-with-quantizer, and one run-level code with residuum 3 is encoded as an escape sequence |
| | if at least one run-level code with residuum 1 was used | one macroblock stuffing code is inserted, the macroblock type is encoded as intra-with-quantizer, and one run-level codes with residuum 1 is encoded as an escape sequence |
| | if at least two run-level codes with residuum 5 were used | the macroblock type is encoded as intra-with-quantizer, and two run-level codes with residuum 2 are encoded as escape sequences |
| | if at least one run-level code with residuum 2 was used and one run- | one macroblock stuffing code is inserted, one run-level code with residuum 2 is |
| | level code with residuum 5 was used | encoded as an escape sequence, and one run-level code with residuum 5 is encoded as an escape sequence |
| | otherwise | two macroblock stuffing codes are inserted, and the macroblock type is encoded as intra-with-quantizer |
| 5 | regardless of the run-level codes | one macroblock stuffing code is inserted |
| 6 | if at least one run-level code with residuum 2 was used | one run-level code with residuum 2 is encoded as an escape sequence |
| | if at least one run-level code with residuum 5 was used | one macroblock stuffing code is inserted, and one run-level codes with residuum 5 is encoded as an escape sequence |
| | if at least one run-level code with residuum 3 was used | one macroblock stuffing code is inserted, the macroblock type is encoded as intra-with-quantizer, and one run-level code with residuum 3 is encoded as an escape sequence |
| | if at least two run-level codes with residuum 7 were used | two run-level codes with residuum 7 are encoded as escape sequences |
| | if at least two run-level codes with residuum 6 were used | the macroblock type is encoded as intra-with-quantizer, and two run-level codes with residuum 6 are encoded as escape sequences |
| | otherwise | four macroblock stuffing codes are inserted, and the macroblock type is encoded as intra-with-quantizer |
| 7 | regardless of the run-level codes | one macroblock stuffing code is inserted, and the macroblock type is encoded as intra-with-quantizer |

FIGURE 8 shows a flowchart for an example macroblock encoding process 300. The process 300 is repeated for each macroblock in each slice. For each macroblock, the encoded data, the size of the encoded data, and the values of the Y, Cb and Cr DC predictors are recorded in the EMI file (the use of the predictors is described below). In accordance with the MPEG-1 video encoding standard, at a block 302, the values of the DC predictors are set to 128 before encoding the first macroblock of each slice. After the first macroblock, the values of the predictors are recorded prior to encoding each macroblock, then the predictors are used as required in the encoding process. At a block 304, a macroblock is encoded. First the coefficients of each block are considered in zig-zag sequence, and all coefficients in the sequence at and after the coefficient limit are set to zero (0). The macroblock is then encoded using the conventional run-level Huffman code combinations, while the run-level code usage is recorded.

At a block 306, coding rules are determined from Table 1 based on residuum of size of encoded data. The macroblock is re-encoded using the determined coding rules, see block 308. At a decision block 312, the process 300 determines if the encoded data is less than 256 bytes. If the decision at the decision block 312 is true, then the process 300 is complete. If the decision at the decision block 312 is false, then the coefficient limit is reduced by 1 and the process 300 returns to the block 304.

### Creating an EMI file for an image

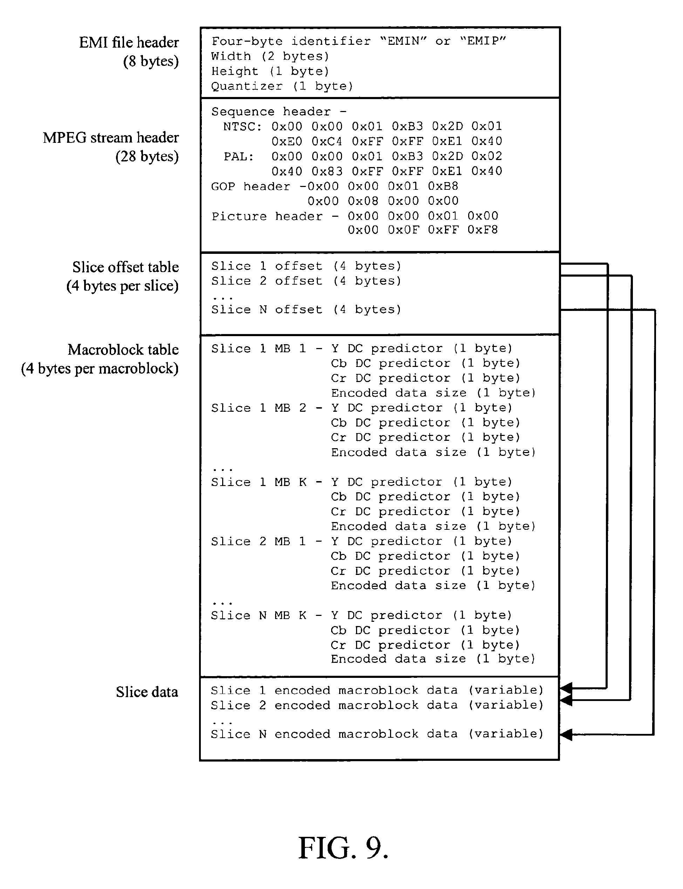

In the preferred embodiment of this invention, the encoded data for an image is gathered into an EMI file with the format shown in FIGURE 9. The file starts with an EMI file header which denotes the identity of the file (including whether the output image is intended to be NTSC or PAL format), and gives the width (number of macroblocks in a slice) and height (number of slices) of the image, as well as the quantizer used in encoding the image. Next follows a conventional MPEG video stream header preformatted for output. The slice offset table contains pointers to the first byte of the encoded data for the first macroblock of each slice in the image. The macroblock data table contains an entry for each macroblock in the image, giving the Y, Cb and Cr predictors for each macroblock, and the number of bytes in the data for the macroblock. The remainder of the file contains the data for sequential macroblocks in the conventional left-to-right, top-to-bottom sequence.

### Generating an MPEG I-frame sequence from an EMI file

Given the data structure shown in FIGURE 9, all necessary data is available to generate an MPEG video sequence with the structure depicted in FIGURE 5. The MPEG sequence will contain a sub-image of the full image encoded in the EMI file, starting at a desired macroblock row and column. The sequence header can be copied directly from the EMI file, slice headers can be generated using the scheme described above, and macroblock data can be copied from the slice data in full-byte chunks. Extra slices above and below the sub-image are simply skipped.

However, in constructing each slice one final factor is to be taken into account. The MPEG video encoding scheme takes advantage of spatial homogeneity when encoding the DC coefficients (Y, Cb and Cr) for each macroblock as a differential from the DC coefficient for the previous block of the same type. In other words, the DC coefficient is encoded as a difference value, rather than as an absolute value. In order for the decoding of a given macroblock to be performed properly, it is necessary that the DC coefficients be adjusted to the proper predictive values.

Recall the process of decoding the macroblocks for a single slice in an I-frame image. Before the first macroblock of the slice is decoded, the Y, Cb and Cr DC predictors are set to the nominal value of 128. The first macroblock is decoded; the data for each block includes a differential on the DC coefficient, which is added to the corresponding predictor (the DC predictor for the Y component accumulates for the four blocks of the macroblock). After the macroblock is decoded, the new values of the DC predictors are applied to the next sequential macroblock to be decoded.

The DC predictors for each macroblock are stored in the macroblock data table in the EMI file. Using these predictors, a guard macroblock can be created as the first block of each slice. The purpose of this macroblock is to establish the proper DC coefficients for the next sequential macroblock in the slice, which is the first valid image macroblock to be displayed in the slice.

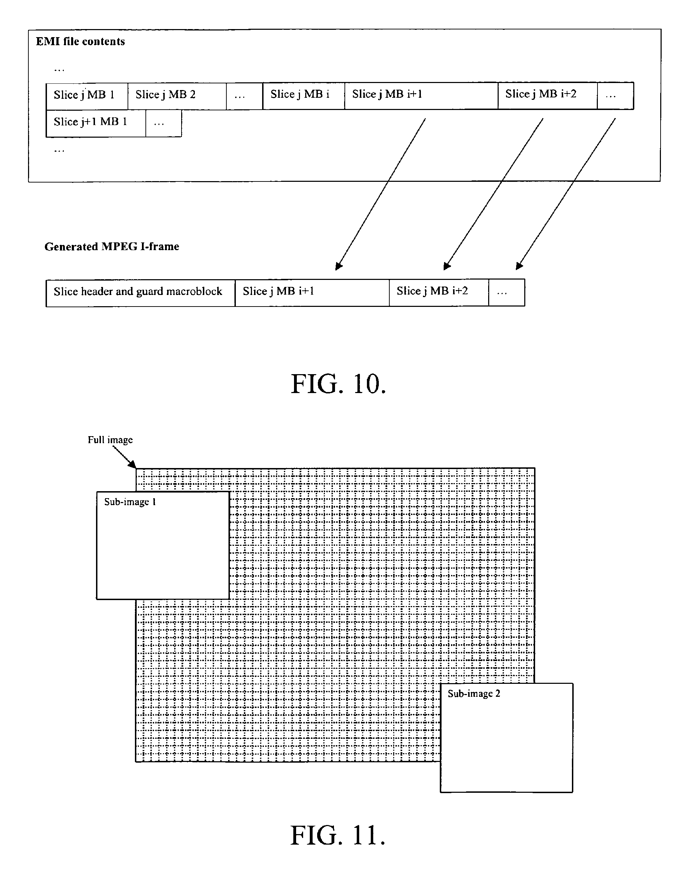

FIGURE 10 shows how the data for a slice is constructed. Suppose that a sub-image is desired starting at the i^{th} macroblock of the j^{th} slice. The slice offset table gives the offset into the slice data of the position of the encoded data for the first macroblock in the j^{th} slice. The macroblock data table gives the size of the encoded data for each macroblock in the slice. The data for the first i macroblocks is skipped, and the required DC predictor values for the (i+1)^{th} macroblock are read from the table. The slice header and guard macroblock are generated together, using slice padding and/or macroblock type encoding to ensure that the guard macroblock ends on a byte boundary. The remainder of the macroblocks for the slice (i+1, i+2, ... i+44) can then be copied from the slice data portion of the EMI file, without requiring any bit shifting or modification of the macroblock data.

### Generating a byte-aligned slice header and guard macroblock

The process of generating a proper byte-aligned slice header and guard macroblock is controlled by the DC predictor coefficients required for the second macroblock in the slice. The required DC coefficient offsets are computed by subtracting the DC predictors for the second macroblock from the nominal predictor value of 128. The resulting Y, Cb and Cr DC coefficients will be encoded using the conventional MPEG-1 dct_dc_size_luminance and dct_dc_size_chrominance tables, Tables 2 and 3 (ISO/IEC 11172-2).

**Table 2.**

| VLC code | dct_dc_size luminance |
|---|---|
| 100 | 0 |
| 00 | 1 |
| 01 | 2 |
| 101 | 3 |
| 110 | 4 |
| 1110 | 5 |
| 11110 | 6 |
| 111110 | 7 |
| 1111110 | 8 |

**Table 3.**

| VLC code | dct_dc_size_chrominance |
|---|---|
| 00 | 0 |
| 01 | 1 |
| 10 | 2 |
| 110 | 3 |
| 1110 | 4 |
| 11110 | 5 |
| 111110 | 6 |
| 1111110 | 7 |
| 11111110 | 8 |

When the guard macroblock is decoded, the Y, Cb and Cr DC predictors will have the required values for the second macroblock in the slice.

Once the required DC coefficients are calculated, the total number of bits required to encode these three coefficients is determined, then added to the number of bits required to encode the slice start code (32), slice extra information bit (1), quantizer (5), and the remainder of the macroblock (address increment 1 bit, macroblock type 1 bit, six EOB codes at 2 bits each and three zero luminance coefficients at 3 bits each). Depending on the residuum of the total number of bits required for the slice header and guard macroblock, the encoding process is modified to produce an even number of bytes of data when producing the final encoding of the slice header and guard macroblock. The rules for the encoding process are given in Table 4.

**Table 4.**

| **If the residuum for the slice header and guard macroblock is ...** | **then when the slice header and macroblock are encoded ...** |
|---|---|
| 0 | no extra information bytes are added to the slice header, and the macroblock type is encoded as intra |
| 1 | one extra information byte is added to the slice header, and the macroblock type is encoded as intra-with-quantizer |
| 2 | the macroblock type is encoded as intra-with-quantizer |
| 3 | five extra information bytes are added to the slice header |
| 4 | four extra information bytes are added to the slice header |
| 5 | three extra information bytes are added to the slice header |
| 6 | two extra information bytes are added to the slice header |
| 7 | one extra information byte is added to the slice header |

Once the slice header and guard macroblock are generated, the data for the remaining macroblocks of the slice is concatenated onto the guard macroblock data. Since all data elements are byte-aligned, no bit shifting is required.

Note that in the case where the sub-image is aligned with the left boundary of the full image (that is, the first displayed macroblock is the first macroblock of the slice), a byte-aligned slice header can be generated without a guard macroblock, since the expected Y, Cb, and Cr luminance values for the first macroblock will be as expected. In this case, the slice header comprises the 32-bit slice start code, 5-bit quantizer, two 9-bit extra information slice entries, and the extra information slice bit (for a total of 56 bits or 7 bytes). The slice macroblocks, including the first in the slice, can then be copied without modification.

Once the required number of slices are generated (30 for NTSC, 36 for PAL), an MPEG sequence end code is appended onto the data. The MPEG I-frame sequence can then be fed to any MPEG-compliant decoder for processing.

Note that the total size of the output MPEG 1-frame sequence can be determined before the sequence is generated. The size of the sequence, GOP and picture header are known (28 bytes), as is the size of the sequence end code (4 bytes). The number of bytes required for each macroblock can be determined from the macroblock data table. The number of bytes required for each slice header and guard macroblock can be determined by examining the required Y, Cb and Cr DC predictors for the guard macroblock. Alternatively, the worst-case size of the slice header with guard block (19 bytes) can be used, leading to a conservative estimate for the final size. The computed size can be used to pre-allocate a buffer sufficiently large to hold the contents of the generated MPEG I-frame sequence.

In some cases, a desirable feature of sub-image extraction and display is the ability to extract a sub-image that overlaps the boundary of the full image. FIGURE 10 shows examples of the relationship between such a sub-image and the corresponding full image. In this case, some slices and/or macroblocks may not contain content encoded in the full image, but must still be represented in the generated MPEG I-frame sequence to allow proper decoding of the desired sub-image content.

In FIGURE 11, each slice in sub-image 1 includes macroblocks for which no data is present in the full image. Additionally, sub-image 2 contains entire slices for which no data is present. In an alternate embodiment of this invention, sufficient data is included in the encoded file format to allow the generation of valid MPEG I-frame sequences corresponding to the sub-images shown in FIGURE 11, as well as any other valid sub-image (including the degenerate case where the sub-image is completely outside the boundary of the full frame). Note also that this technique can be used to encode a full frame that is smaller than the desired 'sub-image', with the additional image content generated by padding using the techniques described below.

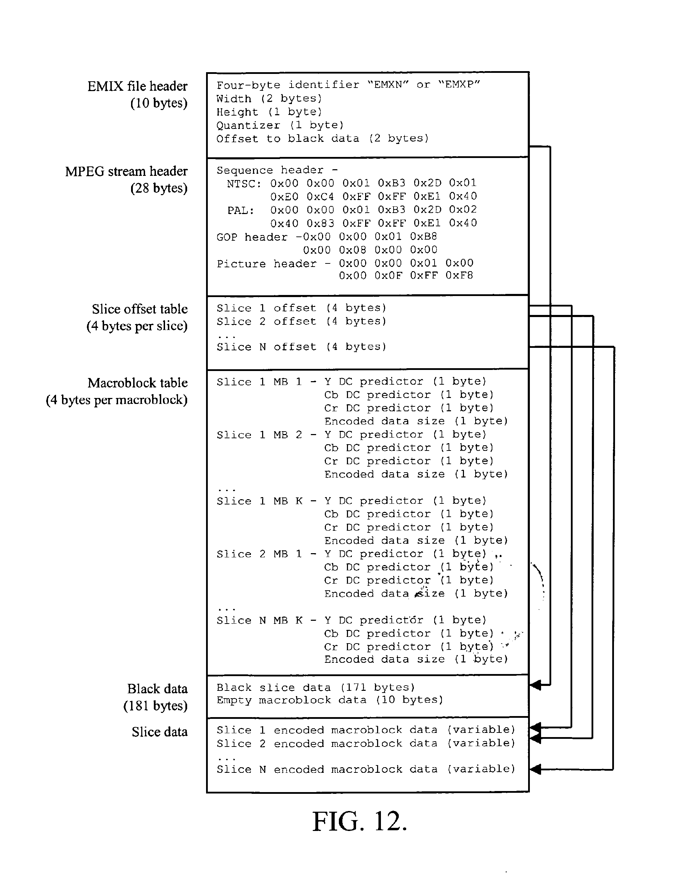

To accomplish this, an Extractable MPEG Image Extended or EMIX format is created that contains additional data for black slices and empty macroblocks. This format is shown in FIGURE 12.

The data for the black slice consists of the following elements:
Five-bit quantization value (00100)
One-bit extra information slice (0)
Macroblock address increment 1 (1)
Macroblock type intra (1)
dct_dc_size_luminance 7 (111110)
DC value -112 (0001111)
End-of-block (EOB) (10)
dct_dc_size_luminance 0 (100)
EOB (10)
dct_dc_size_luminance 0 (100)
EOB (10)
dct_dc_size_luminance 0 (100)
EOB (10)
dct_dc_size_chrominance 0 (00)
EOB (10)
dct_dc_size_chrominance 0 (00)
EOB (10)
44 repetitions of empty macroblock:
   dct_dc_size_luminance 0 (100)
   EOB (10)
   dct_dc_size_luminance 0 (100)
   EOB (10)
   dct_dc_size_luminance 0 (100)
   EOB (10)
   dct_dc_size_luminance 0 (100)
   EOB (10)
   dct_dc_size_chrominance 0 (00)
   EOB (10)
   dct_dc_size_chrominance 0 (00)
   EOB (10)
Padding to byte boundary
for a total of 171 bytes, while the data for an empty macroblock consists of the following elements:
Macroblock stuffing (00000001111)
Macroblock stuffing (00000001111)
Macroblock stuffing (00000001111)
Macroblock stuffing (00000001111)
Macroblock address increment 1 (1)
Macroblock type intra-with-quantizer (01)
Quantizer (qqqqq)
dct_dc_size_luminance 0 (100)
EOB (10)
dct_dc_size_luminance 0 (100)
EOB (10)
dct_dc_size_luminance 0 (100)
EOB (10)
dct_dc_size_luminance 0 (100)
EOB (10)
dct_dc_size_chrominance 0 (00)
EOB (10)
dct_dc_size_chrominance 0 (00)
EOB (10)
for a total of 10 bytes.

The black slice and empty macroblock data can be used to generate padding in any case where the position of the sub-image is such that encoded data from the full image is not available to fill a given slice or macroblock. If an entire slice must be filled, the black slice is simply copied from the EMIX file into the generated MPEG I-frame sequence. If one or more padding macroblocks are required (to the left or right of existing full image data), the empty macroblock is copied from the EMIX file the required number of times to fill the space. The empty macroblock(s) are inserted after the guard macroblock for left padding or after the subimage macroblock data for right padding.

While the preferred embodiment of the invention has been illustrated and described, as noted above, many changes can be made without departing from the spirit and scope of the invention. Accordingly, the scope of the invention is not limited by the disclosure of the preferred embodiment. Instead, the invention should be determined entirely by reference to the claims that follow.
The embodiments of the invention in which an exclusive property or privilege is claimed are defined as follows:

## Claims

1. A computer-based method comprising:
byte aligning macroblocks in an image; and
transmitting at least a portion of all the macroblocks of the image.

2. The method of Claim 1, wherein byte aligning is based on residuum of size of each macroblock in the image.

3. The method of Claim 2, wherein byte aligning comprises padding at least one macroblock based on the residuum of size of the at least one macroblock.

4. A computer-based method comprising:
receiving an image having byte aligned macroblocks;
selecting a portion of the received image;
encoding the selection portion according to a predefined video encoding scheme;
decoding the encoded portion according to the predefined video encoding scheme; and
displaying the decoded portion.

5. The method of Claim 4, wherein the byte aligned macroblocks are based on residuum of size of each macroblock.

6. The method of Claim 4, wherein the predefined video encoding scheme includes at least one of MPEG-1 or MPEG-2.

7. The method of Claim 4, wherein selecting includes manually selecting a portion of the byte aligned image using a user interface device associated with a set top box.

8. A computer-based system comprising:
a first component configured to byte align macroblocks in an image; and
a second component configured to transmit at least a portion of all the macroblocks of the image.

9. The system of Claim 8, wherein the first component byte aligns based on residuum of size of each macroblock in the image.

10. The system of Claim 9, wherein the first component pads at least one macroblock based on the residuum of size of the at least one macroblock.

11. A computer-based system comprising:
a first component configured to receive an image having byte aligned macroblocks;
a second component configured to select a portion of the received image;
a third component configured to encode the selected portion according to a predefined video encoding scheme;
a fourth component configured to decode the encoded portion according to the predefined video encoding scheme; and
a display device configured to display the decoded portion.

12. The system of Claim 11, wherein the components are included in a set top box.

13. The system of Claim 11, wherein the predefined video encoding scheme includes at least one of MPEG-1 or MPEG-2.

14. The system of Claim 11, wherein the first component includes a user interface device configured to allow manual selection of a portion of the byte aligned image.

15. A computer-based system comprising:
a first component configured to byte align macroblocks in an image, wherein the image is larger than a standard image size;
a second component configured to select a portion of the byte aligned image; and
a third component configured to transmit the selected portion of the byte aligned image; and

16. The system of Claim 15, wherein the first component byte aligns based on residuum of size of each macroblock in the image.

17. The system of Claim 16, wherein the first component pads at least one macroblock based on the residuum of size of the at least one macroblock.

18. A computer-based system comprising:
a first component configured to receive an image having byte aligned macroblocks;
a second component configured to encode the received image according to a predefined video encoding scheme;
a third component configured to decode the encoded portion according to the predefined video encoding scheme; and
a display device configured to display the decoded portion.

19. The system of Claim 18, wherein the second computer system includes a set top box.

20. The system of Claim 18, wherein the predefined video encoding scheme includes at least one of MPEG-1 or MPEG-2.

21. A computer-readable medium for performing the method comprising:
byte aligning macroblocks in an image; and
transmitting at least a portion of all the macroblocks of the image.

22. A computer-readable medium for performing the method comprising:
encoding a portion of an image having byte aligned macroblocks, wherein encoding is performed according to a predefined video encoding scheme;
decoding the encoded portion according to the predefined video encoding scheme; and
displaying the decoded portion.
